(19) Europäisches Patentamt
European Patent Office
Office européen des brevets

(11) **EP 4 600 210 A1**

(12) **EUROPEAN PATENT APPLICATION**
published in accordance with Art. 153(4) EPC

(43) Date of publication:
**13.08.2025 Bulletin 2025/33**

(21) Application number: **24823681.2**

(22) Date of filing: **11.06.2024**

(51) International Patent Classification (IPC):
*C01B 33/12* (2006.01)   *C01B 33/32* (2006.01)
*C01B 33/02* (2006.01)   *H01M 4/36* (2006.01)
*H01M 4/48* (2010.01)   *H01M 4/58* (2010.01)
*H01M 4/38* (2006.01)   *H01M 4/62* (2006.01)
*H01M 4/131* (2010.01)   *H01M 4/134* (2010.01)

(52) Cooperative Patent Classification (CPC):
**C01B 33/02; C01B 33/12; C01B 33/32;**
**H01M 4/131; H01M 4/134; H01M 4/36; H01M 4/38;**
**H01M 4/48; H01M 4/58; H01M 4/62;** Y02E 60/10

(86) International application number:
**PCT/KR2024/008002**

(87) International publication number:
**WO 2024/258163 (19.12.2024 Gazette 2024/51)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **12.06.2023 KR 20230075096**

(71) Applicant: **LG CHEM, LTD.**
**Seoul 07336 (KR)**

(72) Inventors:
• **CHEON, Ki Beom**
**Daejeon 34122 (KR)**

• **KO, Sang Ho**
**Daejeon 34122 (KR)**
• **KIM, Kong Kyeom**
**Daejeon 34122 (KR)**
• **UH, Hyoun Soo**
**Daejeon 34122 (KR)**
• **CHOI, Won Yeong**
**Daejeon 34122 (KR)**

(74) Representative: **Plasseraud IP**
**104 Rue de Richelieu**
**CS92104**
**75080 Paris Cedex 02 (FR)**

(54) **LITHIUM SILICON OXIDE, NEGATIVE ELECTRODE COMPRISING SAME, AND LITHIUM SECONDARY BATTERY COMPRISING NEGATIVE ELECTRODE**

(57) The present invention relates to a lithium silicon oxide exhibiting suppressed gas generation upon application to an aqueous slurry, a negative electrode including the same, and a lithium secondary battery including the negative electrode, and provides a lithium silicon oxide having peaks with $2\theta$ being $23.8\pm0.5°$, $24.3\pm0.5°$, and $24.7\pm0.5°$ in an XRD pattern measured using non-monochromatized $CuK\alpha$ rays, and satisfying Mathematical Equation 1, a negative electrode including the same, and a lithium secondary battery including the negative electrode.

[FIG. 1]

**Description**

## TECHNICAL FIELD

### Cross-reference to Related Applications

This application claims the benefit of Korean Patent Application No. 10-2023-0075096, filed on June 12, 2023, in the Korean Intellectual Property Office, the disclosure of which is incorporated herein in its entirety by reference.

### Technical Field

The present invention relates to a lithium silicon oxide exhibiting suppressed gas generation upon application to an aqueous slurry, a negative electrode including the same, and a lithium secondary battery including the negative electrode.

## BACKGROUND ART

Lately, there has been a rising demand for high-capacity, high-output, and high-stability lithium secondary batteries as an application area of lithium secondary batteries has rapidly expanded to power storage supply of large-area devices, such as automobiles and power storage devices, as well as power supply of electronic devices such as electrical, electronic, communication, and computer devices.

The lithium secondary batteries are generally manufactured in a way that a slurry in which positive and negative electrode materials capable of intercalating and deintercalating lithium ions or a negative electrode material capable of absorbing and desorbing lithium ions, and optionally a binder and a conductive material are mixed is applied onto each of a positive electrode current collector and a negative electrode current collector, and a solvent is removed by heat or the like to manufacture a positive electrode and a negative electrode, and the positive electrode and the negative electrode are stacked on both sides of a separator to form an electrode current collector having a predetermined shape, and then the electrode current collector and a non-aqueous electrolyte are inserted into a battery case.

Graphite-based negative electrode materials, which are typical negative electrode materials, maintain excellent structural stability even in the intercalation and deintercalation of lithium and thus show stable capacity retention over long-term cycles, but the materials, limited by a low theoretical capacity of 350 mAh/g for $LiC_6$, are considered inadequate for the current demand for high-energy and high-power materials. In contrast, silicon-based negative electrode materials such as silicon or silicon oxide offer a low reduction potential when paired with lithium, abundant reserves, and a theoretical capacity that is about 10 times greater than graphite (2700~4200 mAh/g for $Li_{4.4}Si$) and are therefore taking center stage as negative electrode materials for next-generation lithium secondary batteries. However, despite these upsides, the silicon-based negative electrodes consume about three times as much lithium as the graphite-based negative electrodes, and when lithium secondary batteries provided with the silicon-based negative electrode materials are charged and discharged, a significant amount of lithium inserted into a negative electrode during an initial charging process fails to return to a positive electrode due to volume expansion and surface side reactions, causing a large initial irreversible capacity.

In addition, in particular, for silicon oxide (SiOx) particles, various approaches such as Mg doping or prelithiation of silicon oxide particles with Li have been explored to enhance the initial efficiency, which is hindered by irreversible reactions of Li ions, but in an aqueous process for preparing a negative electrode slurry using this material, a lithium compound formed within the prelithiated silicon oxide particles reacts with $H_2O$, generating LiOH as a byproduct, and this causes a decrease in slurry viscosity, hydrogen gas generation, and degradation in slurry coating properties, resulting in poor adhesion between a negative electrode material layer and a current collector, and volume expansion.

Therefore, there is a need to develop a negative electrode material exhibiting excellent initial capacity and capacity retention, little change in viscosity in the preparation of a negative electrode material slurry through an aqueous process, suppressed hydrogen generation, and suppressed volume expansion during charge and discharge of a negative electrode using the negative electrode material.

[Related Art Document]

[Patent Document]

(Patent Document 1) KR10-2014-0091388A

## DISCLOSURE OF THE INVENTION

**TECHNICAL PROBLEM**

The present invention is designed to overcome the limitations of the related art, and thus, an aspect of the present invention provides a lithium silicon oxide useful as a negative electrode material, having excellent initial capacity and capacity retention, minimal viscosity change during slurry preparation via an aqueous process, and suppressed hydrogen generation.

Another aspect of the present invention provides a negative electrode including the lithium silicon oxide.

In addition, another aspect of the present invention provides a lithium secondary battery including the negative electrode.

**TECHNICAL SOLUTION**

To resolve the tasks described above, the present invention provides a lithium silicon oxide, a negative electrode including the same, and a lithium secondary battery.

(1) According to an aspect of the present invention, provided is a lithium silicon oxide having peaks with $2\theta$ being $23.8\pm0.5°$, $24.3\pm0.5°$, and $24.7\pm0.5°$ in an XRD pattern measured using non-monochromatized CuK$\alpha$ rays, and satisfying Mathematical Equation 1 below:

[Mathematical Equation 1]

$$y_{sio2,max} \leq 0.4 \cdot y_{si,111}$$

in Mathematical Equation 1 above,
$y_{sio2,max}$ indicates a height of a highest peak among $SiO_2$ peaks located at $2\theta=20.7\pm0.5°$, $21.6\pm0.5°$, and $26.5\pm0.5°$ in the XRD pattern measured using non-monochromatized CuK$\alpha$ rays, and $y_{si,111}$ indicates a height of Si peak located at $2\theta=28.5\pm0.5°$ in the XRD pattern.

(2) The present invention provides the lithium silicon oxide according to (1) above, wherein the lithium silicon oxide satisfies Mathematical Equation 2 below:

[Mathematical Equation 2]

$$I_{q,100}+I_{c,111}+I_{q,011} \leq 0.3 \cdot I_{si,111}$$

in Mathematical Equation 2 above,
$I_{g,100}$, $I_{c,111}$, and $I_{q,011}$ indicate integrated intensities of $SiO_2$ peaks located at $2\theta=20.7\pm0.5°$, $21.6\pm0.5°$, and $26.5\pm0.5°$, respectively, in the XRD pattern measured using non-monochromatized CuK$\alpha$ rays, and $I_{si,111}$ indicates an integrated intensity of Si peak located at $2\theta=28.5\pm0.5°$ in the XRD pattern.

(3) The present invention provides the lithium silicon oxide according to (1) or (2) above, wherein the lithium silicon oxide satisfies Mathematical Equation 3 below:

[Mathematical Equation 3]

$$0\leq y_{o3,111} \leq 0.1 \cdot y_{backgroud}$$

in Mathematical Equation 3 above,
$y_{o3,111}$ indicates a height of $Li_2SiO_3$ peak located at $2\theta=27.0\pm0.2°$ in the XRD pattern measured using non-monochromatized CuK$\alpha$ rays, and $y_{backgroud}$ indicates a height of background peak excluding the $Li_2SiO_3$ peak located at $2\theta=27.0\pm0.2°$ in the XRD pattern.

(4) The present invention provides the lithium silicon oxide according to any one of (1) to (3) above, wherein the lithium silicon oxide has no peaks at $27.0\pm0.2°$ in the XRD pattern measured using non-monochromatized CuK$\alpha$ rays.

(5) The present invention provides the lithium silicon oxide according to any one of (1) to (4) above, wherein the lithium silicon oxide includes Si, SiOx (0<x≤2), and a lithium-containing compound.

(6) The present invention provides the lithium silicon oxide according to (5) above, wherein the Si and the SiOx (0<x≤2) include a carbon coating layer on a surface.

(7) The present invention provides the lithium silicon oxide according to (5) above, wherein the lithium-containing compound includes at least any one of lithium disilicate or lithium silicide.

(8) According to another aspect of the present invention, provided is a negative electrode including a conductive metal current collector, and a negative electrode material layer provided on at least one surface of the current collector, wherein the above negative electrode material layer includes the lithium silicon oxide of any one of (1) to (7) above.

(9) According to another aspect of the present invention, provided is a lithium secondary battery including the negative electrode of (8) above, a positive electrode, a separator provided between the positive electrode and the negative electrode, and an electrolyte.

**ADVANTAGEOUS EFFECTS**

A lithium silicon oxide negative electrode material according to the present invention exhibits excellent initial capacity and capacity retention resulting from suppressed degradation of slurry viscosity due to LiOH by-products and suppressed hydrogen generation even when prepared as an aqueous negative electrode material slurry, and offers little viscosity change and reduced hydrogen generation compared to an aqueous negative electrode material slurry containing typical silicon particles or silicon oxide particles, and may thus prevent slurry coating defects and adhesive strength degradation caused by reduced slurry viscosity and present excellent storage stability.

In addition, a negative electrode according to the present invention includes a negative electrode material layer containing lithium silicon oxide as a negative electrode material, and may thus exhibit excellent initial efficiency and suppressed volume expansion, resulting in superior capacity retention.

**BRIEF DESCRIPTION OF THE DRAWINGS**

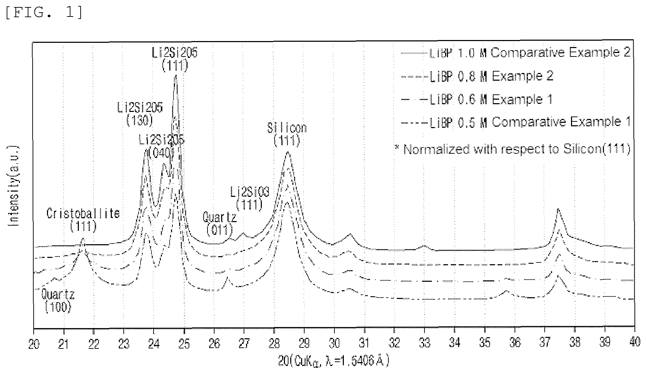

The following drawings attached herein illustrate preferred examples of the present invention by example, and serve to enable technical concepts of the present invention to be further understood together with detailed description of the invention given below, and therefore the present invention should not be interpreted only with matters in such drawings. FIG. 1 is an XRD pattern measured using non-monochromatized CuKα rays of lithium silicon oxides prepared in Examples and Comparative Examples.

**MODE FOR CARRYING OUT THE INVENTION**

Hereinafter, the present invention will be described in detail to aid in understanding of the present invention.

It will be understood that words or terms used in the description and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

Measurement method

Herein, an XRD pattern was measured using a D8 Endeavor powder X-ray diffractometer (Bruker), CuKα rays were used, and a separate monochromator was not used. The measurements were made in the following conditions: voltage: 40 kV, current: 40 mA, 2θ (Bragg angle) = 20~80°, step size = 0.02°, and time/step = 0.30 sec.

Herein, a peak height in the XRD pattern was measured using a 'Net Height' observed in a create area of the Bruker DIFFRAC. EVA program, and specifically, the create area was used as a standard for each peak to set a range of at least twice the full width at half maximum (FWHM), and then both ends of the range were dragged until the net height reached a maximum, and the Net Height in this case was used as the peak height.

Herein, an integrated intensity of peaks in the XRD pattern was evaluated using the single peak fitting of the Bruker DIFFRAC. TOPAS program, LP factor correction was unchecked, and a first-order Chebyshev polynomial was used for background. The type of peak was PV (pseudo-Voigt), and the fitting was performed in two separate sections: 2θ=20.0-23.0° and 2θ=25.8-32.0°. In this case, the PV peak was assigned to all the peaks identified in the section, and then fitted. The resulting 'Area' was taken as the integral intensity.

**Lithium silicon oxide**

The present invention provides a lithium silicon oxide useful as a negative electrode material, having excellent initial capacity and capacity retention, minimal viscosity change during slurry preparation via an aqueous process, and suppressed hydrogen generation.

The lithium silicon oxide according to an embodiment of the present invention has peaks with $2\theta$ being $23.8\pm0.5°$, $24.3\pm0.5°$, and $24.7\pm0.5°$ in an XRD pattern measured using non-monochromatized CuK$\alpha$ rays, and satisfies Mathematical Equation 1 below:

$$[\text{Mathematical Equation 1}]$$

$$y_{sio2,max} \leq 0.4 \cdot y_{si,111}$$

In Mathematical Equation 1 above, $y_{sio2,max}$ indicates a height of a highest peak among $SiO_2$ peaks located at $2\theta=20.7\pm0.5°$, $21.6\pm0.5°$, and $26.5\pm0.5°$ in the XRD pattern measured using non-monochromatized CuK$\alpha$ rays, and $y_{si,111}$ indicates a height of Si peak located at $2\theta=28.5\pm0.5°$ in the XRD pattern.

Graphite-based negative electrode materials, known as negative electrode materials, maintain excellent structural stability even in the intercalation and deintercalation of lithium and thus show stable capacity retention over long-term cycles, but the materials, limited by a low theoretical capacity of 350 mAh/g for $LiC_6$, are considered inadequate for the current demand for high-energy and high-power materials. Instead, silicon or silicon oxide having a theoretical capacity that is about 10 times greater than graphite (~4200 mAh/g for $Li_{4.4}Si$) are gaining attention. However, the silicon-based negative electrodes consume about three times as much lithium as the graphite-based negative electrodes and causes a large initial irreversible capacity, and accordingly, approaches such as Li prelithiation have been explored to enhance the initial efficiency, which is hindered by irreversible reactions of lithium ions. The prelithiated silicon-based negative electrode materials offer excellent charge/discharge efficiency and are thus desirable in terms of cycle characteristics, but cause capacity reduction and gas generation during the process. In particular, crystalline lithium silicate and crystalline silica ($SiO_2$) are present in the prelithiated silicon-based negative electrode material, and since the crystalline lithium silicate is easily dissolved in water, when preparing an aqueous negative electrode material slurry using the prelithiated silicon-based negative electrode material, the crystalline lithium silicate dissolves in water and the silicon inside and water come into contact, oxidizing the silicon and reducing water, thereby generating hydrogen gas, which changes slurry viscosity and deteriorates slurry coating characteristics, and this causes serious defects in the slurry coating, resulting in critical issues such as a rapid capacity decrease due to electrical short circuits with a current collector. In addition, the crystalline silica ($SiO_2$) forms irreversible crystalline lithium silicate during a charging process, thereby consuming lithium and reducing the initial capacity of batteries.

However, the lithium silicon oxide according to the present invention has peaks in a specific position range in the XRD pattern and satisfies Mathematical Equation 1, and may thus be made into an aqueous negative electrode slurry without dissolving in water, thereby preventing slurry coating defects and adhesive strength degradation caused by hydrogen generation, and accordingly, a negative electrode may have excellent integrity, capacity retention, and initial capacity.

Hereinafter, the lithium silicon oxide according to the present invention will be described in detail.

The lithium silicon oxide according to an embodiment of the present invention is useful as a negative electrode material, particularly as a negative electrode material for an aqueous slurry, and has peaks with $2\theta$ being $23.8\pm0.5°$, $24.3\pm0.5°$, and $24.7\pm0.5°$ in an XRD pattern measured using non-monochromatized CuK$\alpha$ rays and satisfies Mathematical Equation 1 below.

$$[\text{Mathematical Equation 1}]$$

$$y_{sio2,max} \leq 0.4 \cdot y_{si,111}$$

In Mathematical Equation 1 above, $y_{sio2,max}$ indicates a height of a highest peak among $SiO_2$ peaks located at $2\theta=20.7\pm0.5°$, $21.6\pm0.5°$, and $26.5\pm0.5°$ in the XRD pattern measured using non-monochromatized CuK$\alpha$ rays, and $y_{si,111}$ indicates a height of Si peak located at $2\theta=28.5\pm0.5°$ in the XRD pattern.

In addition, the lithium silicon oxide may satisfy Mathematical Equation 1-1 below.

[Mathematical Equation 1-1]

$$0.005 \cdot y_{Si,111} \leq y_{sio2,max} \leq 0.4 \cdot y_{Si,111}$$

In Mathematical Equation 1-1 above,
$y_{sio2,max}$ indicates a height of a highest peak among $SiO_2$ peaks located at $2\theta=20.7\pm0.5°$, $21.6\pm0.5°$, and $26.5\pm0.5°$ in the XRD pattern measured using non-monochromatized CuK$\alpha$ rays, and $y_{si,111}$ indicates a height of Si peak located at $2\theta=28.5\pm0.5°$ in the XRD pattern.

When the crystalline $SiO_2$ (quartz, cristobalite), which is a phase in which lithium intercalation/deintercalation is not applicable and satisfies Mathematical Equation 1-1 of the lithium silicon oxide, is limited within an appropriate range, the capacity and efficiency of lithium secondary batteries containing the crystalline $SiO_2$ may not be adversely affected and the crystalline $SiO_2$ may also be further superior in suppressing gas generation by obtaining structural stability.

In addition, the lithium silicon oxide according to an embodiment of the present invention satisfies Mathematical Equation 2 below.

[Mathematical Equation 2]

$$I_{q,100}+I_{c,111}+I_{q,011} \leq 0.3 \cdot I_{si,111}$$

In Mathematical Equation 2 above,
$I_{g,100}$, $I_{c,111}$, and $I_{q,011}$ indicate integrated intensities of $SiO_2$ peaks located at $2\theta=20.7\pm0.5°$, $21.6\pm0.5°$, and $26.5\pm0.5°$, respectively, in the XRD pattern measured using non-monochromatized CuK$\alpha$ rays, and $I_{si,111}$ indicates an integrated intensity of Si peak located at $2\theta=28.5\pm0.5°$ in the XRD pattern.

In addition, the lithium silicon oxide may satisfy Mathematical Equation 2-1 below.

[Mathematical Equation 2-1]

$$0.002 \cdot I_{si,111} \leq I_{q,100}+I_{c,111}+I_{q,011} \leq 0.3 \cdot I_{si,111}$$

In Mathematical Equation 2-1 above,
$I_{g,100}$, $I_{c,111}$, and $I_{q,011}$ indicate integrated intensities of $SiO_2$ peaks located at $2\theta=20.7\pm0.5°$, $21.6\pm0.5°$, and $26.5\pm0.5°$, respectively, in the XRD pattern measured using non-monochromatized CuK$\alpha$ rays, and $I_{si,111}$ indicates an integrated intensity of Si peak located at $2\theta=28.5\pm0.5°$ in the XRD pattern.

When the lithium silicon oxide satisfies Mathematical Equation 2-1 above, the crystalline $SiO_2$ (quartz, cristobalite), which is a phase in which lithium intercalation/deintercalation is not applicable, is limited within an appropriate range, the capacity and efficiency of lithium secondary batteries containing the crystalline $SiO_2$ may not be adversely affected and the crystalline $SiO_2$ may also be further superior in suppressing gas generation by obtaining structural stability.

In addition, the lithium silicon oxide may satisfy Mathematical Equation 3 below.

[Mathematical Equation 3]

$$0 \leq y_{o3,111} \leq 0.1 \cdot y_{backgroud}$$

In Mathematical Equation 3 above,
$y_{o3,111}$ indicates a height of $Li_2SiO_3$ peak located at $2\theta=27.0\pm0.2°$ in the XRD pattern measured using non-monochromatized CuK$\alpha$ rays, and $y_{background}$ indicates a height of background peak excluding the $Li_2SiO_3$ peak located at $2\theta=27.0\pm0.2°$ in the XRD pattern.

As another example, the lithium silicon oxide may have no peaks at $27.0\pm0.2°$ in the XRD pattern measured using non-monochromatized CuK$\alpha$ rays.

As another example, the lithium silicon oxide satisfies Mathematical Equation 2 while satisfying Mathematical Equation 1 and the presence or absence of peaks in a specific position range in the XRD pattern.

As another example, the lithium silicon oxide satisfies Mathematical Equations 2 and 3 while satisfying Mathematical Equation 1 and the presence or absence of peaks in a specific position range in the XRD pattern.

In the present invention, the lithium silicon oxide is produced through prelithiation of a silicon-based compound, such as silicon and/or silicon oxide, with Li.

Meanwhile, when prelithiating a silicon-based compound, crystalline lithium silicate ($Li_2SiO_3$) and lithium disilicate ($Li_2Si_2O_5$) are generally produced by the prelithiation, and since the lithium silicate is easily dissolved in water, when used in the preparation of an aqueous slurry, process and efficiency degradation due to hydrogen gas generation may be caused.

However, the lithium silicon oxide according to the present invention may be prepared through a prelithiation process, which will be described below, using a specific concentration of LiBP (lithium biphenyl), and may thus contain no crystalline lithium silicate and only contain crystalline lithium disilicate that is insoluble in water, and accordingly, the lithium silicon oxide has peaks with $2\theta$ being $23.8\pm0.5°$, $24.3\pm0.5°$, and $24.7\pm0.5°$ in the XRD pattern, and has no peaks at $27.0 \pm0.2°$. In addition, at the same time, Mathematical Equation 1 and/or Mathematical Equation 2 may be satisfied.

The lithium silicon oxide according to the present invention satisfies the above properties, thereby preventing hydrogen generation during the slurry preparation through an aqueous process, and may thus not exhibit coating defects or reduced adhesive strength, but exhibit excellent initial capacity and capacity retention.

In addition, the lithium silicon oxide may include Si (silicon particles), SiOx ($0<x\leq2$) (silicon oxide particles), and a lithium-containing compound.

The Si and the SiOx may each have an amorphous structure, and the Si may have an average particle size ($D_{50}$) of 1 $\mu$m to 20 $\mu$m, and the SiOx may have an average particle size ($D_{50}$) of 5 nm to 1 $\mu$m.

In addition, the Si or SiOx may include a carbon coating layer on a surface, and in this case, the carbon coating layer may have a thickness of 1 nm to 1 $\mu$m, or 100 nm to 1 $\mu$m.

The carbon coating layer includes a carbon-based material, and the carbon-based material may include at least one of amorphous carbon or crystalline carbon.

The crystalline carbon may further enhance the conductivity of the negative electrode material, and may be, for example, at least any one selected from the group consisting of fluorene, carbon nanotubes, and graphene.

In addition, the amorphous carbon helps to maintain the adequate strength of the carbon coating layer, and may be, for example, at least any one carbide selected from the group consisting of tar, pitch, and other organic substances, or a carbon-based material formed using a hydrocarbon as a source in chemical vapor deposition, and the carbides of other organic substances may be carbides of sucrose, glucose, galactose, fructose, lactose, mannose, ribose, aldohexose, or kedohexose, and combinations thereof.

In addition, the hydrocarbon may be a substituted or unsubstituted aliphatic or alicyclic hydrocarbon, a substituted or unsubstituted aromatic hydrocarbon, and may be, for example, methane, ethane, ethylene, acetylene, propane, butane, butene, pentane, isobutane, hexane, benzene, toluene, xylene, styrene, ethylbenzene, diphenylmethane, naphthalene, phenol, cresol, nitrobenzene, chlorobenzene, indene, coumarone, pyridine, anthracene, or phenanthrene.

The lithium-containing compound may be a compound formed through the doping of Si and/or SiOx with lithium metal via prelithiation of Si and/or SiOx, and specifically may include at least any one of lithium disilicate or lithium silicide.

The lithium silicide may include $Li_ySi$ ($2<y<5$), and may be at least one selected from the group consisting of $Li_{4.4}Si$, $Li_{3.75}Si$, $Li_{3.25}Si$, and $Li_{2.33}Si$, for example.

## Method for preparing lithium silicon oxide

The present invention provides a method for preparing the lithium silicon oxide.

The method for preparing the lithium silicon oxide according to an embodiment of the present invention may include step (S1) of adding Si or SiOx ($0<x\leq2$) particles to a lithium compound-containing solution and stirring the mixture in an inert atmosphere; and step (S2) of separating the generated particles and then drying and firing the resulting product, and the lithium compound-containing solution may at a concentration of greater than 0.5 M and less than 1.0 M.

In the method for preparing the lithium silicon oxide according to an embodiment of the present invention, a silicon-based negative electrode material is added to a lithium compound-containing solution at a concentration of greater than 0.5 M and less than 1.0 M, where a lithium compound is dissolved at a specific concentration in an organic solvent, and stirred and heat-treated, and thus Li is inserted and diffused into the silicon-based negative electrode material, causing an appropriate redox reaction process, thereby preparing a lithium silicon oxide having the above-described properties.

Hereinafter, the method for preparing a lithium silicon oxide composite according to an embodiment of the present invention will be described in more detail, divided into steps.

### *Step (S1)*

Step (S1) above is a step in which Si or $SiO_x$ ($0<x\leq2$) is prelithiated to generate lithium silicon oxide particles, and involves adding Si or $SiO_x$ ($0<x\leq2$) particles to a lithium compound-containing solution and stirring the mixture in an inert gas atmosphere, and the lithium compound-containing solution may be at a concentration of greater than 0.5 M and less than 1.0 M.

Herein, the lithium compound-containing solution with a concentration greater than 0.5 M and less than 1.0 M indicates that the lithium compound is dissolved at a concentration of greater than 0.5 moles and less than 1.0 moles per liter of solution.

In an embodiment of the present invention, the Si and the $SiO_x$ ($0<x\leq2$) may each have an amorphous structure, and the silicon (Si) may have an average particle size ($D_{50}$) of 1 $\mu$m to 20 $\mu$m, and the silicon oxide ($SiO_x$ ($0<x\leq2$)) may have an average particle size ($D_{50}$) of 5 nm to 1 $\mu$m.

In addition, the silicon or the silicon oxide may include a carbon coating layer on a surface, and in this case, the carbon coating layer may have a thickness of 1 nm to 1 $\mu$m, or 100 nm to 1 $\mu$m.

The carbon coating layer includes a carbon-based material, and the carbon-based material may include at least one of amorphous carbon or crystalline carbon.

The crystalline carbon may further enhance the conductivity of the negative electrode material, and may be, for example, at least any one selected from the group consisting of fluorene, carbon nanotubes, and graphene.

In addition, the amorphous carbon helps to maintain the adequate strength of the carbon coating layer, and may be, for example, at least any one carbide selected from the group consisting of tar, pitch, and other organic substances, or a carbon-based material formed using a hydrocarbon as a source in chemical vapor deposition, and the carbides of other organic substances may be carbides of sucrose, glucose, galactose, fructose, lactose, mannose, ribose, aldohexose, or kedohexose, and combinations thereof.

In addition, the hydrocarbon may be a substituted or unsubstituted aliphatic or alicyclic hydrocarbon, a substituted or unsubstituted aromatic hydrocarbon, and may be, for example, methane, ethane, ethylene, acetylene, propane, butane, butene, pentane, isobutane, hexane, benzene, toluene, xylene, styrene, ethylbenzene, diphenylmethane, naphthalene, phenol, cresol, nitrobenzene, chlorobenzene, indene, coumarone, pyridine, anthracene, or phenanthrene.

In an embodiment of the present invention, the silicon or the silicon oxide may be added in an amount of greater than 0.131 parts by weight and less than 0.142 parts by weight with respect to 100 parts by weight of the lithium compound-containing solution.

Herein, the lithium compound-containing solution may be prepared by adding a polycyclic aromatic compound or a linear polyphenylene compound to an organic solvent and stirring the mixture to prepare a polycyclic aromatic compound solution or a linear polyphenylene compound solution, and then adding lithium particles to the polycyclic aromatic compound solution or the linear polyphenylene compound solution and making the mixture react.

In addition, the lithium particles react with a polycyclic aromatic compound or a linear polyphenylene compound in a 1:1 molar ratio in a polycyclic aromatic compound solution or a linear polyphenylene compound solution.

In addition, the polycyclic aromatic compound may be at least one selected from the group consisting of naphthalene, anthracene, phenanthrene, naphthacene, pentacene, pyrene, picene, triphenylene, coronene, chrysene, fluorene, and 9,9-dimethylfluorene, and the linear polyphenylene compound may be at least one selected from the group consisting of biphenyl, terphenyl, and 4,4-dimethylbiphenyl. Specifically, the polycyclic aromatic compound may be any one selected from naphthalene, fluorene, and 9,9-dimethylfluorene, and the linear polyphenylene compound may be biphenyl or 4,4-dimethylbiphenyl.

In addition, the organic solvent may be an ether-based solvent, a ketone-based solvent, an ester-based solvent, an alcohol-based solvent, an amine-based solvent, or a mixed solvent thereof, and, for example, the ether solvent may be diethyl ether, tert-butyl methyl ether, tetrahydrofuran, 2-methyltetrahydrofuran, dioxane, 1,2-dimethoxyethene, diethylene glycol dimethyl ether, triethylene glycol dimethyl ether, tetraethylene glycol dimethyl ether, or a mixed solvent thereof. In particular, tetrahydrofuran, 2-methyltetrahydrofuran, dioxane, and 1,2-dimethoxyethane may be desirable.

In addition, acetone, acetophenone, and the like may be used as the ketone-based solvent, and methyl formate, methyl acetate, ethyl acetate, propyl acetate, isopropyl acetate, or a mixed solvent thereof may be used as the ester-based solvent.

In addition, methanol, ethanol, propanol, isopropyl alcohol, or a mixed solvent thereof may be used as the alcohol-based solvent, and methylamine, ethylamine, ethylenediamine, or a mixed solvent thereof may be used as the amine-based solvent.

In addition, the reaction for obtaining the lithium compound-containing solution may be performed at a temperature range of 20 °C to 90 °C for 0.5 to 6.0 hours while stirring, and the lithium compound may be formed more effectively through the stirring at the specified temperature for the indicated time described above.

In step (S1) above, considering the control of lithium ion diffusion rate and appropriate prelithiation, the stirring is performed for 1 hour or more at a temperature range of 30 °C to 90 °C for first stirring, and then performed while cooling to room temperature for second stirring, and the first stirring and second stirring may be performed for the same amount of time.

*Step (S2)*

Step (S2) above is a step for preparing lithium silicon oxide by separating, drying, and firing lithium silicon oxide particles generated in step (S1), and may be performed by separating the particles generated in step (S1), and then drying and firing the resulting product.

The generated particles may be obtained by separating solid particles from a solution through typical methods in the art, and, for example, the solution may be centrifuged to separate a supernatant and the generated particles, which are precipitates.

The drying may be performed through typical methods in the art, and may be performed by allowing the solution to stand for at least 2 hours at a temperature range of 70 °C to 90 °C, or 75 °C to 85 °C.

In addition, the firing may be performed through heat treatment at a temperature range of 850 °C to 900 °C for 1 hour to 2 hours in an inert gas atmosphere.

Meanwhile, in the method for preparing the lithium silicon oxide according to an embodiment of the present invention, the inert gas may be argon, nitrogen, or a combination thereof.

**Negative electrode**

The present invention provides a negative electrode including the lithium silicon oxide.

According to an embodiment of the present invention, the negative electrode includes a conductive metal current collector, and a negative electrode material layer provided on at least one surface of the current collector, and the negative electrode material layer includes the lithium silicon oxide.

The negative electrode according to the present invention includes a negative electrode material layer containing lithium silicon oxide, and may thus exhibit excellent initial efficiency and suppressed volume expansion, resulting in superior capacity retention and long-term stability.

The conductive metal current collector includes a conductive metal having high conductivity, and the conductive metal current collector is not particularly limited as long as it is non-reactive in the voltage range of a battery, and for example, stainless steel, aluminum, nickel, titanium, fired carbon, or aluminum or stainless steel that is surface-treated with one of carbon, nickel, titanium, silver, and the like may be used. In addition, the current collector may have a thickness of 3 $\mu$m to 500 $\mu$m.

Meanwhile, the negative electrode may be prepared in a way that an aqueous solvent, the lithium silicon oxide, a binder, and a conductive material are mixed to prepare a negative electrode material slurry, and the negative electrode material slurry is applied onto at least one surface of a conductive metal current collector, and the dried. Herein, the aqueous solvent may be water.

In addition, as the conductive material, any conductive material may be used without particular limitation as long as it has electronic conductivity without causing chemical changes, and specifically the conductive material may be graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; conductive tubes such as carbon nanotubes; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used.

In addition, the binder may be added typically in an amount of 0.1 wt% to 10 wt% with respect to a total weight of a negative electrode material layer, and examples of the binder may be polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, and various copolymers thereof.

**Lithium secondary battery**

The present invention provides a lithium secondary battery including the negative electrode described above.

According to an embodiment of the present invention, the lithium secondary battery may include the negative electrode, a positive electrode, a separator interposed between the positive electrode and the negative electrode, and an electrolyte. In addition, the lithium secondary battery may selectively further include a battery case for accommodating an electrode assembly composed of the negative electrode, the positive electrode, and the separator, and a sealing member for sealing the battery case.

According to an embodiment of the present invention, the positive electrode may include a positive electrode current collector and a positive electrode material layer positioned on the positive electrode current collector.

According to an embodiment of the present invention, the positive electrode current collector is not particularly limited as long as it has a high conductivity without causing chemical changes in batteries, and for example, copper, stainless steel, aluminum, nickel, titanium, baked carbon, copper or stainless steel that is surface-treated with one of carbon, nickel, titanium, silver, and the like, an aluminum-cadmium alloy, and the like may be used. In addition, the positive electrode current collector may typically have a thickness of 3 $\mu$m to 500 $\mu$m, and fine irregularities may be formed on a surface to improve the adhesion of a positive electrode material. For example, the positive electrode current collector may be used in various forms such as a film, a sheet, a foil, a net, a porous body, a foam body, and a non-woven fabric body.

According to an embodiment of the present invention, the positive electrode material layer may optionally include a binder and a conductive material in addition to the positive electrode material.

According to an embodiment of the present invention, the positive electrode material may be one selected from the group consisting of $LiCoO_2$, $LiCoPO_4$, $LiNiO_2$, $Li_xNi_aCo_eM^1_cM^2_dO_2$ ($M^1$ and $M^2$ are each independently one selected from the group consisting of Al, Mn, Cu, Fe, V, Cr, Mo, Ga, B, W, Mo, Nb, Mg, Hf, Ta, La, Ti, Sr, Ba, Ce, F, P, S, and Y, and $0.9 \leq x \leq 1.1$, $0 < a < 1.0$, $0 < b < 1.0$, $0 \leq c < 0.5$, $0 \leq d < 0.5$, and $a+b+c+d=1$ are satisfied), $LiMnO_2$, $LiMnO_3$, $LiMn_2O_3$, $LiMn_2O_4$, $LiMn_{2-e}M^3_eO_2$ ($M^3$ is at least one selected from the group consisting of Co, Ni, Fe, Cr, Zn, and Ta, and $0.01 \leq e \leq 0.1$ is satisfied), $Li_2Mn_3M^4O_8$ ($M^4$ is at least one selected from the group consisting of Ci, Ni, Fe, Cu and Zn), $LiFePO_4$, $Li_2CuO_2$, $LiV_3O_8$, $V_2O_5$, $Cu_2V_2O_7$, and lithium metal.

According to an embodiment of the present invention, the binder is a component that assists in binding between a conductive material, a positive electrode material, and a current collector, and may be commonly added in an amount of 0.1 wt% to 10 wt% with respect to the total weight of the positive electrode material layer. Examples of the binder may include polyvinylidene fluoride (PVDF), polyvinyl alcohol, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber, nitrile-butadiene rubber, fluorine rubber, various copolymers thereof, and the like.

According to an embodiment of the present invention, the conductive material of the positive electrode material layer is a component for further improving the conductivity of the positive electrode material, and may be added in an amount of 10 wt% or less, preferably 5 wt% or less, with respect to the total weight of the positive electrode material layer. Such conductive material is not particularly limited as long as it has conductivity without causing chemical changes in the battery, and for example, a conductive material, such as: graphite such as natural graphite and artificial graphite; carbon black such as acetylene black, Ketjen black, channel black, furnace black, lamp black, and thermal black; conductive fibers such as carbon fibers and metal fibers; metal powder such as carbon fluoride powder, aluminum powder, and nickel powder; conductive whiskers such as zinc oxide whiskers and potassium titanate whiskers; conductive metal oxide such as titanium oxide; or polyphenylene derivatives, or the like may be used.

According to an embodiment of the present invention, the positive electrode may be manufactured by applying a slurry for forming a positive electrode material layer, which is prepared by dissolving or dispersing a positive electrode material and optionally a binder and a conductive material in a solvent, on a positive electrode current collector, followed by drying, or may be manufactured by casting a separate support with a slurry for forming a positive electrode material layer and then laminating a film separated from the support on the positive electrode current collector.

According to an embodiment of the present invention, the separator is to separate the negative electrode and the positive electrode and to provide a movement path for lithium ions, and any separator may be used without particular limitation as long as it is typically used as a separator in a lithium secondary battery, and particularly, a separator having high moisture-retention ability for an electrolyte as well as low resistance to the movement of electrolyte ions is preferable. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous nonwoven fabric, for example, a nonwoven fabric formed of high melting point glass fibers or polyethylene terephthalate fibers may be used. Furthermore, a coated separator including a ceramic component or a polymer component may be used to secure heat resistance or mechanical strength, and the separator having a single layer or multilayer structure may be used.

According to an embodiment of the present invention, as the electrolyte, an organic liquid electrolyte, an inorganic liquid electrolyte, a solid polymer electrolyte, a gel-type polymer electrolyte, an inorganic solid electrolyte, a molten-type inorganic electrolyte, or the like that is usable in the manufacture of a lithium secondary battery may be used without particular limitation. As a specifically example, the electrolyte may include an organic solvent and a lithium salt.

According to an embodiment of the present invention, as the organic solvent, any organic solvent may be used without particular limitation as long as it may serve as a medium through which ions involved in an electrochemical reaction of a battery may move. Specifically, as the organic solvent, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among these solvents, a carbonate-based solvent is preferable, and a mixture of a cyclic carbonate (e.g., ethylene carbonate or propylene carbonate) having a high ionic conductivity and a high dielectric constant and a linear carbonate-based compound having a low viscosity (e.g**.,** ethylmethyl carbonate, dimethyl carbonate, or diethyl carbonate), the mixture which may increase charging/discharging performance of a battery, is more preferable.

According to an embodiment of the present invention, any compound may be used as the lithium salt without particular limitation as long as it may provide lithium ions used in a lithium secondary battery. To be specific, an anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and as the lithium salt, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$ may be used. The lithium salt may be preferably used in a concentration range of 0.1 M to 2.0 M. When the concentration of the lithium salt is included within the above range, the electrolyte has suitable conductivity and viscosity and may thus exhibit excellent performance, and lithium ions may effectively move.

According to an embodiment of the present invention, in addition to the above-described electrolyte components, for example, at least one additive selected from the group consisting of vinylene carbonate (VC), vinyl ethylene carbonate (VEC), fluoro ethylene carbonate (FEC), propane sultone (PS), 1,3-propane sultone (PRS), ethylene sulfate (Esa), succinonitrile (SN), adiponitrile (AN), hexane tricarbonitrile (HTCN), $\gamma$-butyrolactone, biphenyl (BP), cyclohexyl benzene (CHB), and tert-amyl benzene (TAB), or at least one additive such as a haloalkylene carbonate-based compound such as difluoroethylene carbonate, pyridine, triethylphosphite, triethanolamine, a cyclic ether, ethylenediamine, n-glyme, hexaphosphoric triamide, a nitrobenzene derivative, sulfur, a quinone imine dye, an N-substituted oxazolidinone, an N,N-substituted imidazolidine, an ethylene glycol dialkyl ether, an ammonium salt, pyrrole, 2-methoxyethanol, or aluminum trichloride may be further included in the electrolyte for the purpose of enhancing the lifetime characteristics of batteries, suppressing a reduction in battery capacity, enhancing the discharge capacity of batteries, and the like. In this case, the additive may be included in an amount of 0.1 wt% to 5 wt% with respect to a total weight of the electrolyte.

The lithium secondary battery including the negative electrode according to the present invention stably exhibits excellent capacity properties, output properties, and lifespan properties, and thus, are useful for portable devices such as a mobile phone, a notebook computer, and a digital camera, and in the field of electric cars such as a hybrid electric vehicle (HEV) and an electric vehicle (EV).

The outer shape of the lithium secondary battery of the present invention is not particularly limited, and thus a cylindrical shape using a can, a prismatic shape, a pouch shape, or a coin shape, may be used.

The lithium secondary battery according to the present invention may be used in a battery cell which is used as a power source for a small-sized device, and may also be preferably used as a unit cell for a medium- and large-sized battery module including a plurality of battery cells.

Accordingly, according to an embodiment of the present invention, a battery module including the lithium secondary battery as a unit cell, and a battery pack including the same are provided.

According to an embodiment of the present invention, the battery module or the battery pack may be used as a power source of one or more medium-and-large-sized devices, for example, a power tool, an electric car such as an electric vehicle (EV), a hybrid electric vehicle (HEV), and a plug-in hybrid electric vehicle (PHEV), or a power storage system.

## Example

Hereinafter, examples of the present invention will be described in detail in such a manner that it may easily be performed by a person skilled in the art to which the present invention pertains. The present invention may, however, be embodied in many different forms, and is not limited to Examples set forth herein.

## Example 1

2.78 g of biphenyl was added to 30 ml of 2-methyltetrahydrofuran and stirred for 10 minutes, and when the solution turned transparent, 0.125 g of Li powder was added thereto and stirred for 6 hours to prepare a dark green 0.6 M LiBP solution.

4 g of SiOx/C (0<x≤2) powder having a carbon coating layer on a surface and an average particle size ($D_{50}$) of 5 μm was added to the LiBP solution and stirred at 80 °C for 1 hour. The evaporated solvent was collected through a reflux condenser to keep the concentration constant. Thereafter, the resulting product was cooled to room temperature (25 °C) and stirred for an additional hour. In this case, all processes were performed in an argon atmosphere.

Thereafter, the solution was centrifuged to isolate only powder particles therefrom, the isolated particles were dried at 80 °C for 6 hours, heated to 900 °C, and heat-treated for 2 hours in an argon atmosphere to prepare lithium silicon oxide.

**Example 2**

Referring to Example 1, except that a 0.8 M LiBP solution was prepared using 3.7 g of biphenyl and 0.166 g of Li powder, lithium silicon oxide was prepared in the same manner as in Example 1.

**Comparative Example 1**

Referring to Example 1, except that a 0.5 M LiBP solution was prepared using 2.31 g of biphenyl and 0.104 g of Li powder, lithium silicon oxide was prepared in the same manner as in Example 1.

**Comparative Example 2**

Referring to Example 1, except that a 1.0 M LiBP solution was prepared using 4.62 g of biphenyl and 0.21 g of Li powder, lithium silicon oxide was prepared in the same manner as in Example 1.

**Experimental Example 1**

XRD analysis was performed on each lithium silicon oxide prepared in Examples and Comparative Examples for comparative analysis of characteristics, and the results are shown in FIG. 1 and Table 1.

An XRD pattern was measured using a D8 Endeavor powder X-ray diffractometer (Bruker), CuK$\alpha$ rays were used, and a separate monochromator was not used. The measurements were made in the following conditions: voltage: 40 mA, current: 40 mA, $2\theta$ (Bragg angle) = 20~80°, step size = 0.02°, and time/step = 0.30 sec, and the presence or absence of peaks was observed at $2\theta$=23.8$\pm$0.5° (peak 1), 24.3$\pm$0.5° (peak 2), and 24.7$\pm$0.5° (peak 3) in the measured XRD pattern.

In addition, a height of a highest peak ($y_{sio2,max}$) among SiO$_2$ peaks at $2\theta$=20.7$\pm$0.5°, 21.6$\pm$0.5°, and 26.5$\pm$0.5° in the XRD pattern and a height of Si peak ($y_{si,111}$) at $2\theta$=28.5$\pm$0.5° were evaluated to determine whether Mathematical Equation 1 was satisfied. In this case, each peak height in the XRD pattern was measured using a 'Net Height' observed in a create area of the Bruker DIFFRAC. EVA program, and specifically, the create area was used as a standard for each peak to set a range of at least twice the full width at half maximum (FWHM), and then both ends of the range were dragged until the net height reached a maximum, and the Net Height in this case was used as the peak height.

$$[\text{Mathematical Equation 1}]$$

$$y_{sio2,max} \leq 0.4 y_{si,111}$$

In Mathematical Equation 1 above,

$y_{sio2,max}$ indicates a height of a highest peak among SiO$_2$ peaks located at $2\theta$=20.7$\pm$0.5°, 21.6$\pm$0.5°, and 26.5$\pm$0.5° in the XRD pattern measured using non-monochromatized CuK$\alpha$ rays, and $y_{si,111}$ indicates a height of Si peak located at $2\theta$=28.5$\pm$0.5° in the XRD pattern.

In addition, an integrated intensity of peaks in the XRD pattern was evaluated to determine whether Mathematical Equation 2 was satisfied, and in this case, the integrated intensity of peaks was measured using the single peak fitting of the Bruker DIFFRAC. TOPAS program, LP factor correction was unchecked, and a first-order Chebyshev polynomial was used for background. The type of peak was PV (pseudo-Voigt), and the fitting was performed in two separate sections: $2\theta$=20.0-23.0° and $2\theta$=25.8-32.0°. In this case, the PV peak was assigned to all the peaks identified in the section, and then fitted. The resulting 'Area' was taken as the integral intensity.

$$[\text{Mathematical Equation 2}]$$

$$I_{q,100} + I_{c,111} + I_{q,011} \leq 0.3 \cdot I_{si,111}$$

In Mathematical Equation 2 above,

$I_{q,100}$, $I_{c,111}$, and $I_{q,011}$ indicate integrated intensities of SiO$_2$ peaks located at $2\theta$=20.7$\pm$0.5°, 21.6$\pm$0.5°, and 26.5$\pm$0.5°, respectively, in the XRD pattern measured using non-monochromatized CuK$\alpha$ rays, and $I_{si,111}$ indicates an integrated intensity of Si peak located at $2\theta$=28.5$\pm$0.5° in the XRD pattern.

In addition, a height of $Li_2SiO_3$ peak ($y_{o3,111}$) and a background height ($y_{backgroud}$) at the position of $2\theta=27.0\pm0.2°$ in the XRD pattern were evaluated to determine whether Mathematical Equation 3 was satisfied. In this case, each peak height in the XRD pattern was measured using the Bruker DIFFRAC. EVA program, and in the beginning, noise was removed using a smooth function (smooth factor = 0.15), and the peak height was measured using a 'Net Height' observed in a create area, and specifically, the create area was used as a standard for each peak to set a range of at least twice the full width at half maximum (FWHM), and then both ends of the range were dragged until the net height reached a maximum, and the Net Height in this case was used as the peak height. In addition, a difference between Gross Int. and Net Height observed at this point is taken as the background peak height ($y_{backgroud}$).

[Mathematical Equation 3]

$$0\leq y_{o3,111} \leq 0.1 \cdot y_{backgroud}$$

In Mathematical Equation 3 above,

$y_{o3,111}$ indicates a height of $Li_2SiO_3$ peak located at $2\theta=27.0\pm0.2°$ in the XRD pattern measured using non-monochromatized CuK$\alpha$ rays, and $y_{background}$ indicates a height of background peak excluding the $Li_2SiO_3$ peak located at $2\theta=27.0\pm0.2°$ in the XRD pattern.

[Table 1]

| Item | XRD pattern | | | | | | | | | | |
| --- | --- | --- | --- | --- | --- | --- | --- | --- | --- | --- | --- |
| | Peak height | | | | | | Peak integrated intensity | | | | |
| | $y_{sio2,max}$ | $y_{si,111}$ | Mathematical Equation 1 | $y_{o3,111}$ | $y_{backgroud}$ | Mathematical Equation 3 | $I_{q,100}$ | $I_{c,111}$ | $I_{q,011}$ | $I_{si,111}$ | Mathematical Equation 2 |
| Example 1 | 11 | 46 | O | 0.18 6 | 10.2 | O | 0 | 485 | 15 | 3227 | O |
| Example 2 | 5 | 76 | O | 0.24 7 | 16.8 | O | 0 | 169 | 0 | 5698 | O |
| Comparative Example 1 | 44 | 80 | X | 0.48 9 | 18.6 | O | 306 | 2053 | 180 | 5654 | X |
| Comparative Example 2 | 3 | 87 | O | 5.11 | 16.7 | X | 0 | 0 | 41 | 5409 | O |

As seen in Table 1 and FIG. 1 above, the lithium silicon oxides of Examples 1 and 2 had peaks 1, 2, and 3 at positions $2\theta=23.8\pm0.5°$, $24.3\pm0.5°$, and $24.7\pm0.5°$ in the XRD pattern, and at the same time, satisfied Mathematical Equations 1 to 3. In contrast, the lithium silicon oxides of Comparative Examples 1 and 2 failed to satisfy Mathematical Equations 1 and 2 or failed to satisfy Mathematical Equations 3.

**Experimental Example 2**

Using the lithium silicon oxide prepared in Examples and Comparative Examples, a negative electrode material aqueous slurry was prepared, and an amount of gas generation was measured. The results are shown in Table 2 below.

Each lithium silicon oxide, graphite, Super-C65 as a conductive material, and carboxymethyl cellulose and styrene-butadiene rubber binder as a binder were mixed in a weight ratio of 77:19.2:1:1.1:1.6 in a water solvent to prepare a negative electrode material aqueous slurry. Thereafter, 5 g of the negative electrode material aqueous slurry was placed in an aluminum pouch, sealed, and stored in an oven at 60 °C, and an amount of gas generation was measured using a specific gravity balance.

[Table 2]

| Item | Gas generation per unit mass of negative electrode active material (ml/g) | | | | | | |
|---|---|---|---|---|---|---|---|
| | 16 h | 40 h | 64 h | 88 h | 112 h | 136 h | 160 h |
| Example 1 | 5 | - | - | 5 | 6 | 6 | 6 |
| Example 2 | 4 | 5 | - | - | 6 | 6 | 6 |
| Comparative Example 1 | 9 | 10 | 10 | 10 | - | - | 10 |
| Comparative Example 2 | 18 | 31 | - | - | 41 | 44 | 48 |

As seen in Table 2 above, it was determined that the negative electrode material slurry including the lithium silicon oxide of Examples 1 and 2 showed a smaller amount of gas generation than Comparative Examples 1 to 2, and specifically, exhibited, after long-term storage, a significant reduction in gas generation, reaching only 1/8 of the levels observed in Comparative Example 2 that failed to satisfy Mathematical Equation 3 as shown in Table 1 above.

**Experimental Example 3**

Using the lithium silicon oxides of Examples and Comparative Examples, half-cells were manufactured and battery characteristics were measured, and the results are shown in Table 3 below.

Each lithium silicon oxide was mixed with Super-C65 as a conductive material and li-PAA as a binder in a weight ratio of 70:15:15 to prepare a negative electrode slurry, and the slurry was then applied onto copper foil and dried, rolled, and punched to prepare a negative electrode.

Lithium metal was used as a counter electrode, and a porous polyethylene separator was placed between the negative electrode and the lithium metal, and an electrolyte in which 1 M LiPF6, 1.5 wt% VC, and 0.5 wt% PS were dissolved in a solvent where ethylene carbonate (EC) and ethyl methyl carbonate (EMC) were mixed in a volume ratio of 30:70 was added to manufacture a coin half-cell.

After standing the coin half-cell for 24 hours, the coin half-cell was charged up to 0.005 V at a constant current (CC) of 0.1 C in a range of 0.005-1.5 V vs. Li/Li+, charged at constant voltage (V) until the charging current reached 0.02 C, and then discharged at a constant current (CC) of 0.1 C to determine the first cycle charge and discharge capacities and initial efficiency.

[Table 3]

| Item | Charge capacity (mAh/g) | Discharge capacity (mAh/g) | Initial efficiency (%) |
|---|---|---|---|
| Example 1 | 1640 | 1300 | 79 |
| Example 2 | 1461 | 1112 | 76 |
| Comparative Example 1 | 1585 | 1189 | 75 |
| Comparative Example 2 | 1419 | 1010 | 71 |

As seen in Table 3 above, the initial efficiency of Examples 1 and 2 was found to be higher than that of Comparative Examples 1 and 2.

The results in Tables 1 to 3 above reveal that the lithium silicon oxide according to the present invention has peaks in a specific position range in the XRD pattern but has no peak in another specific position range, and satisfies Mathematical Equation 1, and may thus be made into an aqueous negative electrode slurry without dissolving in water, resulting in a significant reduction in gas generation, and accordingly, the negative electrode may have excellent integrity, leading to enhanced storage stability, initial capacity, and capacity retention.

**Claims**

1. A lithium silicon oxide having peaks with 2θ being 23.8±0.5°, 24.3±0.5°, and 24.7±0.5° in an XRD pattern measured using non-monochromatized CuKα rays, and satisfying Mathematical Equation 1 below:

[Mathematical Equation 1]

$$y_{sio2,max} \leq 0.4 \cdot y_{si,111}$$

wherein in Mathematical Equation 1 above,

$y_{sio2,max}$ indicates a height of a highest peak among $SiO_2$ peaks located at $2\theta=20.7\pm0.5°$, $21.6\pm0.5°$, and $26.5\pm0.5°$ in the XRD pattern measured using non-monochromatized $CuK\alpha$ rays, and $y_{si,111}$ indicates a height of Si peak located at $2\theta=28.5\pm0.5°$ in the XRD pattern.

2. The lithium silicon oxide of claim 1, satisfying Mathematical Equation 2 below:

[Mathematical Equation 2]

$$I_{q,100}+I_{c,111}+I_{q,011} \leq 0.3 \cdot I_{si,111}$$

wherein in Mathematical Equation 2 above,

$I_{q,100}$, $I_{c,111}$, and $I_{q,011}$ indicate integrated intensities of $SiO_2$ peaks located at $2\theta=20.7\pm0.5°$, $21.6\pm0.5°$, and $26.5\pm0.5°$, respectively, in the XRD pattern measured using non-monochromatized $CuK\alpha$ rays, and $I_{si,111}$ indicates an integrated intensity of Si peak located at $2\theta=28.5\pm0.5°$ in the XRD pattern.

3. The lithium silicon oxide of claim 1, satisfying Mathematical Equation 3 below:

[Mathematical Equation 3]

$$0 \leq y_{o3,111} \leq 0.1 \cdot y_{backgroud}$$

wherein in Mathematical Equation 3 above,

$y_{o3,111}$ indicates a height of $Li_2SiO_3$ peak located at $2\theta=27.0\pm0.2°$ in the XRD pattern measured using non-monochromatized $CuK\alpha$ rays, and $y_{backgroud}$ indicates a height of background peak excluding the $Li_2SiO_3$ peak located at $2\theta=27.0\pm0.2°$ in the XRD pattern.

4. The lithium silicon oxide of claim 1, having no peaks at $27.0\pm0.2°$ in the XRD pattern measured using non-monochromatized $CuK\alpha$ rays.

5. The lithium silicon oxide of claim 1, comprising Si, SiOx ($0<x\leq2$), and a lithium-containing compound.

6. The lithium silicon oxide of claim 5, wherein the Si and the SiOx ($0<x\leq2$) comprise a carbon coating layer on a surface.

7. The lithium silicon oxide of claim 5, wherein the lithium-containing compound comprises at least any one of lithium disilicate or lithium silicide.

8. A negative electrode comprising:

a conductive metal current collector; and
a negative electrode material layer provided on at least one surface of the current collector,
wherein the negative electrode material layer comprises the lithium silicon oxide of claim 1.

9. A lithium secondary battery comprising the negative electrode according to claim 8; a positive electrode; a separator provided between the positive electrode and the negative electrode, and an electrolyte.

[FIG. 1]

## INTERNATIONAL SEARCH REPORT

| International application No. |
| --- |
| **PCT/KR2024/008002** |

| A. | CLASSIFICATION OF SUBJECT MATTER |
| --- | --- |

**C01B 33/12**(2006.01)i; **C01B 33/32**(2006.01)i; **C01B 33/02**(2006.01)i; **H01M 4/36**(2006.01)i; **H01M 4/48**(2010.01)i; **H01M 4/58**(2010.01)i; **H01M 4/38**(2006.01)i; **H01M 4/62**(2006.01)i; **H01M 4/131**(2010.01)i; **H01M 4/134**(2010.01)i

According to International Patent Classification (IPC) or to both national classification and IPC

| B. | FIELDS SEARCHED |
| --- | --- |

Minimum documentation searched (classification system followed by classification symbols)

C01B 33/12(2006.01); H01M 10/052(2010.01); H01M 10/0565(2010.01); H01M 4/36(2006.01); H01M 4/38(2006.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬실리콘산화물(lithium silicon oxide), XRD(X-ray diffraction), 리튬 실리케이트(lithium silicate), Li2Si2O5, SiO2, 음극(anode, negative electrode)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | YAN, Ming-Yan et al. Enabling SiOx/C Anode with High Initial Coulombic Efficiency through a Chemical Pre-Lithiation Strategy for High-Energy-Density Lithium-Ion Batteries. ACS Applied Materials & Interfaces. 2020, vol. 12, pp. 27202-27209. <br> See page 27203, and Fig. 4(a). | 1-9 |
| A | KR 10-2022-0089774 A (KOREA INSTITUTE OF ENERGY RESEARCH) 29 June 2022 (2022-06-29) <br> See paragraphs [0058]-[0062], and figure 4a. | 1-9 |
| A | KR 10-2023-0025349 A (LG ENERGY SOLUTION, LTD.) 21 February 2023 (2023-02-21) <br> See paragraphs [0046]-[0057], and claim 1. | 1-9 |
| A | JP 2020-167176 A (SANYO ELECTRIC CO., LTD.) 08 October 2020 (2020-10-08) <br> See paragraphs [0010] and [0025]-[0030]. | 1-9 |
| A | JP 2015-153520 A (OSAKA TITANIUM TECHNOLOGIES CO., LTD.) 24 August 2015 (2015-08-24) <br> See paragraphs [0023]-[0029]. | 1-9 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **19 September 2024** | **19 September 2024** |

| Name and mailing address of the ISA/KR | Authorized officer |
| --- | --- |
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/008002**

| Patent document cited in search report | | | Publication date (day/month/year) | Patent family member(s) | | | Publication date (day/month/year) |
|---|---|---|---|---|---|---|---|
| KR | 10-2022-0089774 | A | 29 June 2022 | None | | | |
| KR | 10-2023-0025349 | A | 21 February 2023 | CA | 3209570 | A1 | 16 February 2023 |
| | | | | CN | 116830296 | A | 29 September 2023 |
| | | | | EP | 4268298 | A1 | 01 November 2023 |
| | | | | JP | 2024-505867 | A | 08 February 2024 |
| | | | | KR | 10-2023-0025318 | A | 21 February 2023 |
| | | | | KR | 10-2663399 | B1 | 08 May 2024 |
| | | | | US | 2023-0054932 | A1 | 23 February 2023 |
| | | | | WO | 2023-018187 | A1 | 16 February 2023 |
| JP | 2020-167176 | A | 08 October 2020 | CN | 106575751 | A | 19 April 2017 |
| | | | | CN | 106575751 | B | 31 March 2020 |
| | | | | CN | 107112521 | A | 29 August 2017 |
| | | | | CN | 107112521 | B | 05 May 2020 |
| | | | | CN | 107112522 | A | 29 August 2017 |
| | | | | CN | 107112522 | B | 01 June 2021 |
| | | | | CN | 107210435 | A | 26 September 2017 |
| | | | | CN | 107210435 | B | 26 March 2021 |
| | | | | CN | 107210436 | A | 26 September 2017 |
| | | | | CN | 107210436 | B | 16 June 2020 |
| | | | | JP | 2020-119908 | A | 06 August 2020 |
| | | | | JP | 6613250 | B2 | 27 November 2019 |
| | | | | JP | 6685938 | B2 | 22 April 2020 |
| | | | | JP | 6685939 | B2 | 22 April 2020 |
| | | | | JP | 6833511 | B2 | 24 February 2021 |
| | | | | JP | 7004764 | B2 | 21 January 2022 |
| | | | | US | 10312507 | B2 | 04 June 2019 |
| | | | | US | 10516153 | B2 | 24 December 2019 |
| | | | | US | 10516158 | B2 | 24 December 2019 |
| | | | | US | 11043665 | B2 | 22 June 2021 |
| | | | | US | 2017-0214041 | A1 | 27 July 2017 |
| | | | | US | 2017-0324083 | A1 | 09 November 2017 |
| | | | | US | 2017-0331102 | A1 | 16 November 2017 |
| | | | | US | 2017-0346066 | A1 | 30 November 2017 |
| | | | | US | 2017-0352881 | A1 | 07 December 2017 |
| | | | | WO | 2016-035290 | A1 | 10 March 2016 |
| | | | | WO | 2016-121323 | A1 | 04 August 2016 |
| | | | | WO | 2016-121324 | A1 | 04 August 2016 |
| | | | | WO | 2016-121325 | A1 | 04 August 2016 |
| | | | | WO | 2016-121326 | A1 | 04 August 2016 |
| JP | 2015-153520 | A | 24 August 2015 | JP | 5870129 | B2 | 24 February 2016 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230075096

- KR 1020140091388 A